# EUROPEAN PATENT APPLICATION

(11) **EP 1 193 516 A2**
(43) Date of publication of application: **03.04.2002**
(21) Application number: 01121730.4
(22) Date of filing: 18.09.2001
(51) Int. Cl.: G02B 6/38

(54) **Adapter for coupling used with fiber optic connectors**

(30) Priority: 28.09.2000 US 670905
(71) Applicant: F.C.I. - Framatome Connectors International, 92400 Courbevoie (FR)
(72) Inventor: Shuey, Joseph B., Camp Hill, PA 17011 (US); Houtz, Timothy W., Etters, PA 17319 (US)
(74) Representative: Beetz & Partner Patentanwälte

(57) **Abstract**

A holding device for supporting and containing a ferrule (19) that is adapted to align to connectors (30) is described. The holding device comprises a unitary structure (20) including a flexible elongated sleeve (15) member that is adapted to contain and to position the ferrule (19) in the sleeve member (15).

## Description

The present invention relates to adapters for optical fiber connectors, and more particularly to an improved structure for supporting and containing a ferrule as employed in an optical fiber connector assembly.

The use of optical fibers has revolutionized communications. As a result of this, the use of optical fibers has greatly increased over the past several years. Fiber optic connectors of a wide variety of designs have been employed to terminate optical fiber cables and to facilitate connection of the cables to other cables of other optical fiber transmission devices. A typical fiber optic connector includes a ferrule which aligns one or more optical fibers within the connector. The ferrules may generally be fabricated of such material as ceramic although other materials can be used. A ferrule holder or other housing component of the connector container of the ferrule may be fabricated of such material as molded plastic.

A primary objective of most fiber optic connectors is to optically interconnect the optical fibers upon which the fiber optic connector is mounted with other optical fibers or other components in a manner which minimizes the attenuation of the optical signals by aligning and maintaining direct fiber contact. As the applications for optical communications demand increased levels of performance and, therefore, decreased levels of attenuation, more demands are being placed upon fiber optic connectors to provide a secure optical connection with even lower levels of attenuation, and to continue to provide direct fiber contact as the connector is subjected to increased physical loads or forces. Connectors of this type are normally substantially fully assembled before engagement with the end of the cable.

An adapter is used to secure optical connectors together. The adapter also includes a ferrule to align the mating optical connectors. The adapter body has structure to surround the ferrule so as to allow for easy manipulation of the ferrule which will result in an easier manipulation and resulting alignment of the optical fibers located in the ferrule. This is especially true when one is dealing with a split ferrule structure which aligns the optical fibers therein. As a general rule one does not want to directly handle a split ferrule. It is therefore a desirable situation to easily capture a ferrule in a holder, and easily manipulate it. The ferrule holder is basically used to capture the ferrule and hold it in place.

Such holding structure for ferrules is strategic in view of the critical alignment that is required for the two optical connectors which are mated together, i.e. the axis of fibers must be in alignment within about a few (e.g. plus or minus five) microns. Disturbing the position of the end of the optical fibers even a very small degree will interfere with a transmitted communication carried by the cable.

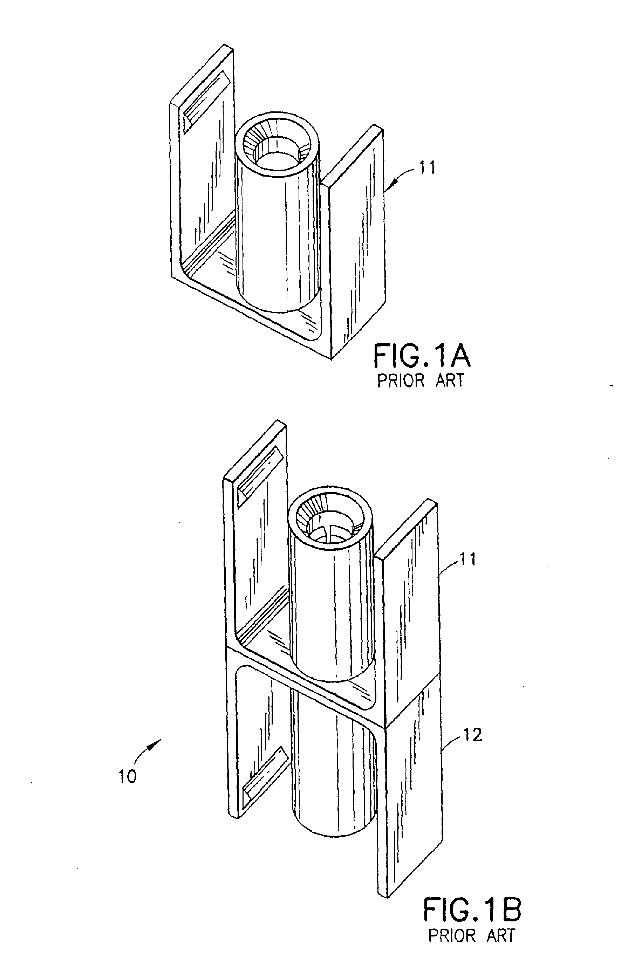

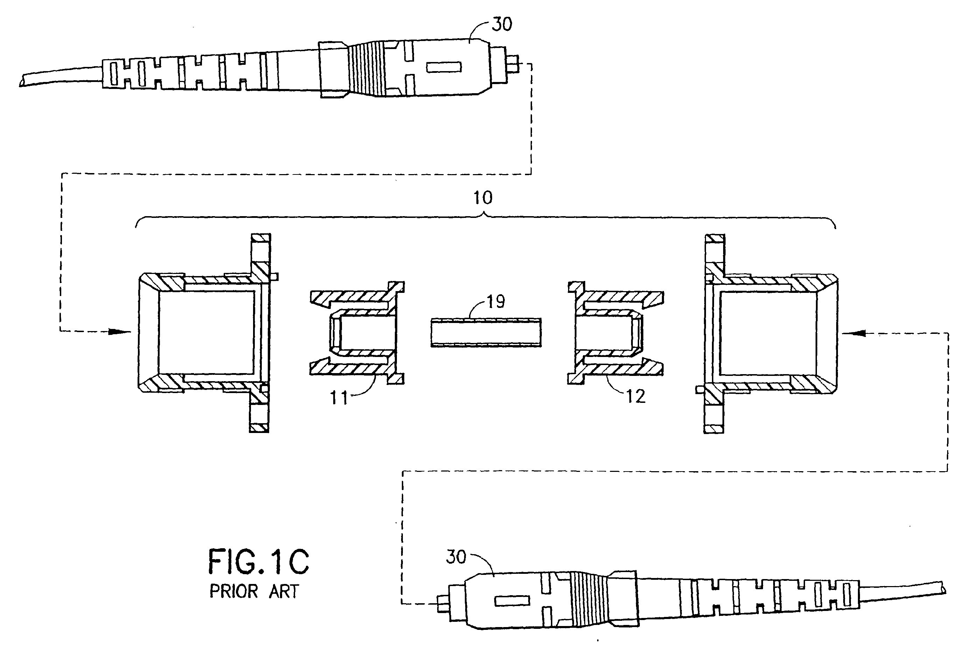

A typical known physical arrangement of an adapter and the various components typically employed in the adapter are illustrated in Fig. 1A and Fig. 1B. The illustrated adapter 10 is manufactured by assembling two (preferably identical) plastic molded inner housings 11 and 12 while capturing the critical ceramic ferrule between the identical halves 11 and 12 in the ferrule coupling area. The halves 11 and 12 are then permanently bonded using, for example, an adhesive solvent or an ultrasonic welding technique to firmly join the two halves together. The sub-assembly is then placed between two outer housings (see Fig. 1C). Similarly, the outer housings are permanently bonded by adhesive, welding or other suitable technique. The adapter can now receive optical connectors 30.

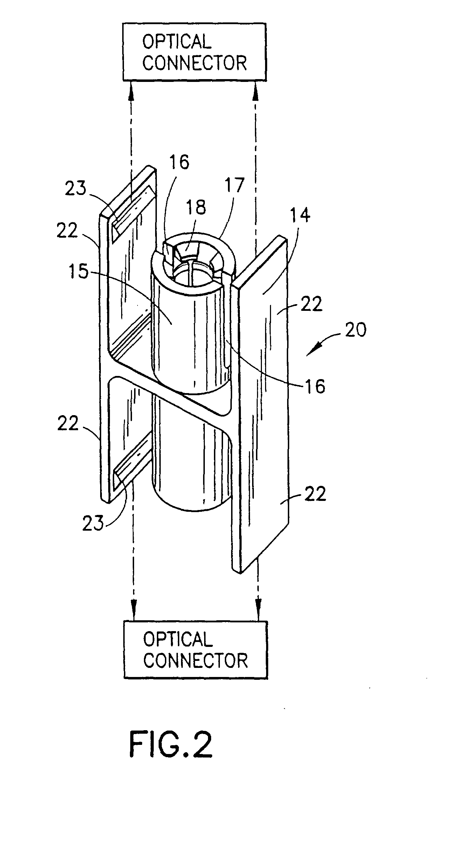

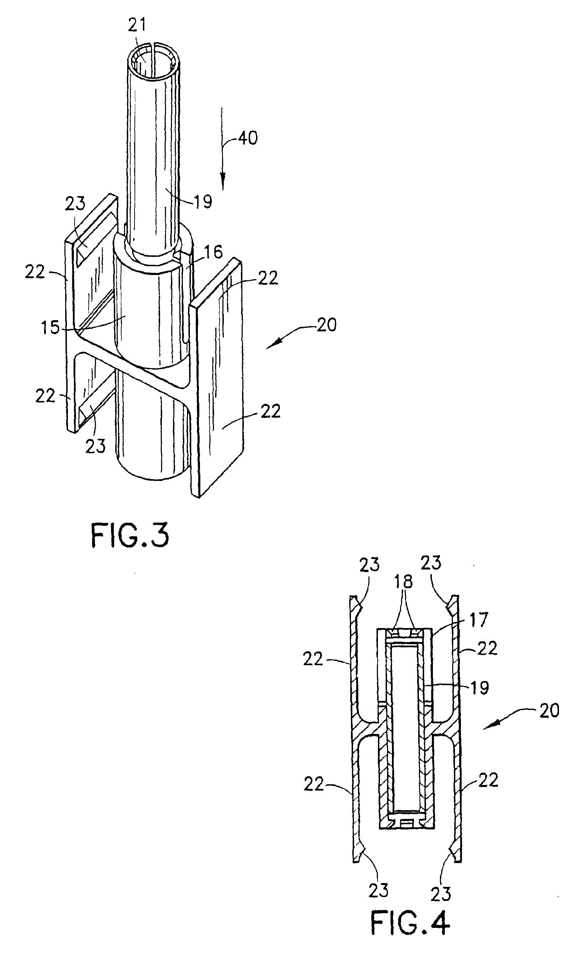

The primary disadvantage of the ferrule holding device as illustrated in Fig. 1B is the cost of manufacturing a very large number of these devices. By forming the subassembly as illustrated in Fig. 1B, i.e. a device formed of two separate pieces each piece as illustrated in Fig. 1A there is required a bonding procedure to secure the pieces together. The cost of manufacturing such a ferrule holding device is significant, especially when a large number of these devices are manufactured, i.e. many millions of these devices. Other examples of related technology are as follows:
U.S. Patent No. 4,101,198 describes a fiber optic connector which comprises a three-piece ferrule suitable for very small optical fibers, a boot and a shoulder nut for coupling with an outside-threaded split sleeve, and which provides closer concentricity tolerances and low loss transmission of light from the end of one fiber to the end of another.
U.S. Patent No. 4,240,695 describes an end-to-end connector for optical fibers. A plastic body has opposed sockets leading to an interconnecting bore. The sockets receive terminals in which the fibers to be connected are aligned and gripped. Fig. 1 of the patent illustrates a body 10 made from two pieces 16 and 18 that surround terminals 14.
U.S. Patent No. 4,705,352 describes a fiber optic connector for coupling a fiber optic cable. The connector includes a two part clamp body having a V shaped groove therethrough defining a passage. As part of the overall structure described by the patent there is illustrated a split sleeve which functions to retain clamp body parts together.
U.S. Patent No. 4,898,446 describes an optical fiber connector useful for high density arrays. Fig. 2 of the patent illustrates an insert positioned between two blocks within a sleeve.
U.S. Patent No. 5,337,386 describes a fiber optic connector for interconnecting a fiber optic pin terminus and fiber optic socket terminus which includes a receptacle connector body and a plug connector body. Fig. 3 of the patent illustrates a split plug body with a latch that engages a groove in a receptacle body.
U.S. Patent No. 5,420,951 describes a locking fiber optic connector receptacle. The patent focuses on an optical fiber connector having a plug portion comprising at least one plug ferrule and a receptacle having a socket for receiving the ferrule. Fig. 3 of the patent illustrates a two piece holder that surrounds a sleeve.
U.S. Patent No. 5,436,994 describes a fiber optic connector in which a ferrule is slidably and resiliently biased to prevent forces being transmitted to the ferrule structure.
U.S. Patent No. 5,815,618 describes an optical fiber connector adapter which includes a guide cylinder to accommodate two ferrules each attached to an end of a different optical fiber, which are to be connected to each other with their optical axes aligned by inserting the ferrules in the guide cylinder from its opposite sides. Fig. 2 of the patent illustrates a two piece adapter that surrounds a cylinder.
U.S. Patent No. 5,828,806 discloses a fiber optic connector including a body member having an axially extending cavity with a circumferential flange projecting radially into the cavity and defining a passage through the flange. The flange is slotted to define a plurality of radially inwardly extending flexible stop fingers. A ferrule is provided for mounting an optical fiber. A ferrule holder has a circumferential rib projecting radially outwardly therefrom to define a circumferential stop shoulder. Each version of the coupling nut illustrated in Figs. 6-9 of the patent includes inwardly directed flanges which flex to allow entry of a ferrule holder, but prevent a shoulder from exiting.

A very basic and significant advantage of the present invention over conventional configurations for a ferrule holding device is that the present invention provides a ferrule holding device which is formed of a unitary, single piece structure as compared to the conventional devices which require a bonding process to bond at least two pieces together to form a completed ferrule holding device. Such an additional manufacturing process, of course, adds significantly to the overall cost to manufacture the holding device and also increases the overall time to manufacture these holding devices. This becomes a rather significant issue since many millions of these holding devices are manufactured at one time.

In accordance with one embodiment of the present invention a holding device for supporting and containing a ferrule that is adapted to align optical connectors comprises a unitary structure including a flexible elongated sleeve member adapted to contain and to position the ferrule in the sleeve member.

In accordance with another embodiment of the present invention an optical connector assembly comprises: a plurality of optical connectors; and an adapter for aligning mating pairs of plurality of optical connectors, the adapter having an integral body for supporting and containing a ferrule, the body including a flexible elongated sleeve member to contain and to position the ferrule therein.

An additional embodiment of the present invention includes a housing of an optical adapter for receiving a ferrule comprising a body; and a sleeve extending from the body, the sleeve housing a first end and having retention structure for retaining the ferrule in the sleeve; and a split second end opposite the first end having retention structure for retaining the ferrule in the sleeve; wherein the split second end is adapted to receive the ferrule for insertion into the sleeve.

Still another embodiment of the present invention includes a method of inserting a ferrule into a housing of an optical adapter comprising the steps of providing a housing having a sleeve for receiving a ferrule, the sleeve including a first end having retention structure to retain the ferrule in the sleeve; and a second end opposite the first end and having retention structure to retain the ferrule in the sleeve; and inserting the ferrule into the sleeve from the second end.

Still another embodiment of the present invention comprises an improvement in an optical adapter having a sleeve retaining a ferrule therein, the improvement comprising the sleeve being unitary before insertion of the ferrule.

The foregoing aspects and other features of the present invention are explained in the following description, taken in connection with the accompanying drawings, wherein:
Fig. 1A is a perspective view of a section of a conventional holding device for a ferrule;
Fig. 1B is a perspective view of a conventional sub-assembly for an optical adapter which has been manufactured by bonding together with a ferrule therebetween, two of the sections as illustrated in Fig. 1A;
Fig. 1C is a perspective exploded view of a conventional optical connector incorporating the type of conventional holding device for a ferrule as illustrated in Fig. 1B;
Fig. 2 is a perspective view of a sub-assembly for an optical adapter in accordance with the specific features of the present invention;
Fig. 3 is a perspective view of an inner housing of an optical adapter in accordance with the specific features of the present invention illustrating a ferrule being inserted into the device; and
Fig. 4 is a cross sectional view of the sub-assembly as illustrated in Fig. 2 with a ferrule securely positioned within the sub-assembly.

Although the present invention will be described with reference to the various embodiments shown in the drawings, it should be understood that the present invention can be embodied in many alternate forms of embodiments. In addition, any suitable size, shape or type of elements or materials could be used.

Figures 1A and 1B illustrate various components of an optical adapter 10 as is known in the art. Specifically there is illustrated in Fig. 1A one of two sections 11 and 12 which are bonded together, after insertion of the ferrule, to form therebetween, as specifically illustrated in Fig. 1B, the sub-assembly, i.e. two sections 11 and 12 bonded together and surrounding the ferrule.

As illustrated in Fig. 2 a holding device 20, which is a unitary body structure in accordance with the preferred features of the present invention for containing and supporting a ferrule avoids any kind of bonding process as is required by conventional ferrule holding devices. Sub-assembly or holding device 20 comprises a unitary, one piece plastic molded structure 14 including a flexible elongated sleeve member 15 adapted to contain and loosely position a ferrule therein. The sleeve member 15 includes one or more slots 16 extending longitudinally along the sleeve preferably from only one end portion of the sleeve member 15. These slots 16 will impart a desired degree of flexibility to sleeve member 15 so that a ferrule structure 19 (see Fig. 3) can be inserted therein. In fact the slots 16 allow sleeve 15 to accept ferrules of various sizes (i.e. diameter) due to the ability of the sleeve member 15 to be flexible. The end portion 17 of tubular sleeve 15 includes projections 18 extending inwardly from the inside surface of tubular member 15. These projections are flexed in an outward direction so as when a ferrule 19 (see Fig. 3) is inserted within holding device 20 in the direction of arrow 40 these projections 18 will flex outwardly permitting the ferrule to be inserted within sleeve member 15. Once the ferrule is completely inserted within the tubular member 15 of the holding device 20, projections 18 resiliently move back to their at rest position thereby containing the ferrule 19 within the ferrule holding device 20. Ferrule 19 is preferably a split ceramic ferrule having slot 21 extending along the ferrule longitudinally, although other arrangements and materials are possible. This slot 21 in ferrule 19 also extends to the ferrule a degree of flexibility. Therefore, when the ferrule is inserted within the tubular member 15 the slot 21 makes it a little easier to insert the ferrule, i.e. due to the increased flexibility extended to the ferrule. Inner housing 20 is preferably an H shaped device having a plurality of arm members 22 extending substantially parallel to the tubular member 15 portion of ferrule holding device 20. The one piece, unitary plastic holding device is formed of molded plastic, preferably formed from an injection molding process. Each of the end portions of the arm members 22 of the H shaped one piece device have projections 23 extending inwardly from each arm member 22. Once holding device 20 is placed within the outer housings, the adapter 10 is assembled. The projections 23 act as part of a latching mechanism which permit the adapter 10 to retain the optical connectors.

The connectors 30, although illustrated in Fig. 1C as SC connectors, can be any of many known structures for a fiber optical connector but generally comprise a ferrule 19 plus frame subassembly and a coupling housing 11 and 12. The subassembly generally defines the end of the optical fibers. Although not shown in Fig. 1C, in accordance with the features of the present invention, ferrule 19 would be positioned within a unitary holding device 20 as illustrated in Figs. 3 and 4.

In Fig. 4 there is illustrated a ferrule 19 in an inserted (at rest) position within the longitudinal tubular member 15 of ferrule holding device 20. Shown are projections 18 at end portion 17 of the tubular member 15, which projections are in an "at rest" position which help in preventing the ferrule 19 from falling out of holding device 20. The spacing of the projections 18 at opposite ends of tubular member 15 preferably allows ferrule 19 to move slightly therebetween to accommodate, for example, manufacturing tolerances. The projections 18 have a tapered surface so that, as a ferrule is inserted into tubular member 15 projections 18 cause the split section of tubular member 15 to spread apart. Also illustrated are inwardly extending projections 23 located on each of arm numbers 22. As stated above, these projections 23 act as a locking or retaining mechanism, which in effect, lock or secure the holding device 20 to an optical connector (see Fig. 2).

In accordance with the features of the present invention and as the terms are used herein, the word "unitary" means one piece; a single piece of material; and not two pieces of material that have been bonded together.

It should be understood that the foregoing description is only illustrative of the invention. Various alternatives and modifications can be devised by those skilled in the art without departing from the invention. Accordingly, the present invention is intended to embrace all such alternatives, modifications and variances which fall within the scope of the appended claims.

## Claims

1. A holding device for supporting and containing a ferrule (19), wherein said ferrule (19) is adapted to align optical connectors (30), said holding device comprising a unitary body structure (20) including a flexible elongated sleeve member (15), said sleeve member (15) being adapted to contain and to position said ferrule (19) in said sleeve member (15).

2. A device according to claim 1 wherein said flexible sleeve member (15) comprises an elongated tubular member extending parallel to the axis of said unitary body structure (20), said sleeve member (15) having two end portions, one of each end portion being positioned at each of the end portion of said unitary body structure (20).

3. A device according to claim 1 or 2, wherein said unitary body structure (20) is H shaped having a plurality of arm members (22) extending parallel to said sleeve member (15), in particular said tubular member.

4. A device according to claim 1, 2 or 3 wherein at least one of said end portions of said sleeve member (15), in particular said turbular member includes at least one slot (16), said at least one slot (16) allowing said sleeve member (15), in particular said tubular member, to flex when said ferrule (19) is inserted therein.

5. A device according to claim 1, 2, 3 or 4 wherein at least one of said end portions of said sleeve member (15), in particular said tubular member includes a plurality of slots (16).

6. A device according to claim 5 wherein said plurality of slots (16) is positioned only at one end of said sleeve member (15) in particular said tubular member.

7. A device according to claim 2, 3, 4, 5 or 6 wherein said tubular member is sufficiently flexible to allow its tubular shape to return to its original shape after said ferrule (19) is inserted therein, thereby capturing said ferrule (19) in said device.

8. A device according to one of the foregoing claims wherein said unitary body structure (20) is plastic.

9. A device according to one of the foregoing claims, wherein said ferrule (19) is a split ferrule.

10. A device according to one of the foregoing claims, wherein said sleeve member (15), in particular said tubular member, includes an inside surface having at least one of said end portions.

11. A device according to one of the claims 3 through 10 wherein each of said arm members (22) includes inwardly extending projections (23) thereon, each projection (23) being adapted to be latched onto a connector housing structure.

12. An optical connector assembly comprising
(i) a plurality of optical connectors (30); and
(ii) an adapter (10) for aligning mating pairs of the plurality of optical connectors (30), the adapter (10) having an integral body structure (20) for supporting and containing a ferrule (19), the integral body structure including a flexible elongated sleeve member (15), to contain and to position the ferrule (19) therein.

13. A housing of an optical adapter for receiving a ferrule (19), comprising:
a body (20); and
a sleeve (15) extending from said body (20), said sleeve (15) having:
a first end having retention structure for retaining the ferrule (19) in said sleeve (15);
and
a split second end (17) opposite said first end having retention
structure (18) for retaining the ferrule (19) in said sleeve (15);
wherein said split second end (17) is adapted to receive the ferrule (19) for insertion into said sleeve (15).

14. The housing as recited in claim 13, wherein said retention structure (18) of said second end (17) includes a tapered lead-in surface for expanding said second end (17) during insertion of the ferrule (17).

15. The housing as recited in claim 13 or 14, wherein the housing is one unitary piece.

16. An optical adapter having a sleeve (15) retaining a ferrule (19) therein, wherein the improvement comprises said sleeve (15) being unitary before insertion of said ferrule (19).

17. A method of inserting a ferule (19) into a housing of an optical adapter (10), comprising steps of:
providing a housing having a sleeve (15) for receiving a ferrule (19), said sleeve (15) including:
a first end having retention structure to retain said ferrule (19)
in said sleeve (15);
and
a second end (17) opposite said first end and having retention
structure (18)to retain said ferrule (19) in said sleeve (15); and
inserting said ferrule (19) into said sleeve (15) from said second end (17).

18. The method as recited in claim 17, wherein said second end is split and the inserting step comprises expanding said split second end (17).

19. The method as recited in claim 17 or 18, wherein the housing providing step comprises the step of providing a unitary housing.
